Europäisches Patentamt

(19) European Patent Office

Office européen des brevets

(11) Numéro de publication : **0 006 276**
**B1**

(12) FASCICULE DE BREVET EUROPÉEN

(45) Date de publication du fascicule du brevet :
24.02.82

(51) Int. Cl.³ : **B 23 K   7/02**

(21) Numéro de dépôt : **79200312.1**

(22) Date de dépôt : **18.06.79**

(54) Installation pour couper un ruban métallique en mouvement, en pièces uniformes.

(30) Priorité : **21.06.78 LU 79853**

(43) Date de publication de la demande :
**09.01.80 (Bulletin 80/01)**

(45) Mention de la délivrance du brevet :
**24.02.82 Bulletin 82/08**

(84) Etats contractants désignés :
**BE CH DE FR GB SE**

(56) Documents cités :
**DE - A - 1 917 484**
**DE - A - 2 204 992**
**DE - B - 1 236 304**
**DE - B - 1 288 763**
**DE - B - 2 536 429**
**FR - A - 1 504 954**
**GB - A - 1 106 034**
**US - A - 3 322 418**
**US - A - 3 687 433**
**US - A - 4 050 160**

(73) Titulaire : **METALLURGIE HOBOKEN-OVERPELT**
**Société anonyme dite:**
**8, rue Montagne du Parc**
**B-1000 Bruxelles (BE)**

(72) Inventeur : **Dompas, John Mary Anthony**
**Leemanslaan 6**
**B-2430 Olen (BE)**

(74) Mandataire : **Saelemaekers, Juul et al**
**METALLURGIE HOBOKEN-OVERPELT A. Greiner-straat 14**
**B-2710 Hoboken (BE)**

Imprimerie Jouve, 18, rue St-Denis, 75001 Paris, France

# Installation pour couper un ruban métallique en mouvement, en pièces uniformes

La présente invention se rapporte à une installation pour couper un ruban métallique en mouvement, en pièces uniformes, comportant

— un convoyeur à rouleaux sans fin mobile, dont le brin supérieur supporte le ruban dans une zone de coupe,

— un chariot, situé au-dessus du ruban et adapté à se déplacer dans la zone susdite dans le sens de l'avancement du ruban et dans le sens inverse, et

— un dispositif de coupe thermique, qui est porté par le chariot susdit et qui est adapté à se déplacer dans un sens transversal au sens de l'avancement du ruban.

Lorsqu'une telle installation est en fonctionnement, le chariot se déplace dans le même sens que le ruban pendant une opération de coupe et il se déplace dans le sens inverse entre deux opérations de coupe successives. Il va de soi que dans une telle installation, il importe que les rouleaux du convoyeur supportant le ruban restent suffisamment distants du dispositif de coupe pendant l'opération de coupe pour qu'ils ne soient pas endommagés.

Une telle installation est décrite dans le document US-A-3 322 418. Dans cette installation connue, le convoyeur est couplé au chariot de façon qu'il suive le mouvement de va-et-vient du chariot et que le dispositif de coupe ne puisse pas se rapprocher des rouleaux du convoyeur.

Dans cette installation connue, il est pratiquement impossible de refroidir convenablement les rouleaux qui supportent le ruban. Il s'ensuit que les rouleaux qui se trouvent à proximité du dispositif de coupe vont s'échauffer et se détériorer rapidement. Ce sera également le cas avec les autres rouleaux supportant le ruban, lorsque l'installation est utilisée pour découper un ruban très chaud tel un ruban sortant d'une machine de coulée continue. Il s'y ajoute encore que, dans cette installation connue, le temps s'écoulant entre deux opérations de coupe successives, doit être relativement élevé, puisque ce temps doit suffire pour remettre l'ensemble du chariot et du convoyeur dans sa position de départ. Il s'ensuit que le nombre de coupes que cette installation peut effectuer par unité de temps doit être relativement faible.

Le but de la présente invention est de fournir une installation du type ci-dessus, qui évite les inconvénients de cette installation connue.

A cet effet, selon l'invention le convoyeur susdit est adapté à tourner de façon que son brin supérieur se déplace en continu dans le sens de l'avancement du ruban et l'installation comporte des premiers moyens pour indiquer la position des rouleaux du convoyeur par rapport à la position du chariot et des seconds moyens pour faire agir ces premiers moyens sur la vitesse du convoyeur et sur l'opération de coupe.

Ces premiers et seconds moyens veillent à ce que le convoyeur s'avance de façon que le dispositif de coupe ne se rapproche pas trop des rouleaux qui supportent le ruban près de la ligne de coupe.

Lesdits premiers moyens comportent, avantageusement, un élément pivotant autour d'un pivot monté sur le chariot et un nombre de doigts égal au nombre des rouleaux successifs du convoyeur, ces doigts étant montés sur un des côtés du convoyeur de façon que la position de chacun desdits rouleaux successifs soit témoignée par un de ces doigts et la partie inférieure de l'élément pivotant étant adaptée à être engagée par un de ces doigts.

Le chariot peut être conçu de façon qu'il permette de couper uniquement suivant un profil rectiligne transversal au sens de l'avancement du ruban, ce qui est le cas avec l'installation de l'art antérieur mentionnée ci-dessus.

Le chariot peut également être conçu de façon qu'il permette de couper suivant un profil quelconque. Dans ce cas, le chariot comporte avantageusement un premier élément coulissable dans un sens transversal au sens de l'avancement du ruban, des moyens pour faire coulisser cet élément, un second élément solidaire du dispositif de coupe et d'une tige de guidage et adapté à coulisser sur le premier élément dans un sens parallèle au sens de l'avancement du ruban, et une coulisse de guidage, solidaire du chariot, pour la tige de guidage, la forme de cette coulisse correspondant au profil de coupe désiré.

Le dispositif de coupe thermique est avantageusement constitué de deux torches à plasma disposées de façon à pouvoir opérer en parallèle.

L'installation selon l'invention convient particulièrement pour couper en anodes, un ruban en cuivre pour anodes obtenu par coulée continue.

D'autres détails et particularités de l'invention ressortiront de la description d'une installation suivant l'invention pour couper un ruban de cuivre en anodes, donnée ci-après à titre d'exemple non limitatif et avec référence aux dessins ci-annexés.

Dans ces dessins :

la figure 1 représente une vue latérale schématique du chariot portant le dispositif de coupe et du convoyeur à rouleaux supportant un ruban en cuivre pour anodes à découper ;

la figure 2 représente une coupe transversale agrandie selon la ligne II-II de la figure 1 ;

la figure 3 représente une coupe axiale agrandie d'un rouleau du convoyeur de la figure 1 ;

la figure 4 représente une coupe selon la ligne IV-IV de la figure 3 ;

la figure 5 représente une vue en plan d'une partie d'une chaîne du convoyeur à rouleaux de la figure 1 ;

la figure 6 représente une vue latérale de la partie de chaîne de la figure 5 ;

la figure 7 représente une vue frontale de deux rouleaux du convoyeur montés entre les deux chaînes servant à l'entraînement du convoyeur de la figure 1 ;

la figure 8 représente une vue en plan de deux paires de rouleaux du convoyeur montés entre les deux chaînes servant à l'entraînement du convoyeur de la figure 1 ;

la figure 9 représente une vue latérale plus détaillée du chariot porte-torches de la figure 1 ;

la figure 10 représente une vue en plan du chariot porte-torches de la figure 9 ;

la figure 11 représente une coupe selon la ligne XI-XI de la figure 9 ; .

la figure 12 représente un schéma du mouvement cyclique du dispositif de coupe ;

la figure 13 représente une coupe axiale d'une torche munie d'un manchon de refroidissement ;

la figure 14 représente une coupe selon la ligne XIV-XIV de la figure 13 ;

la figure 15 représente une vue latérale schématique du dispositif de détection de la position du chariot par rapport aux rouleaux du convoyeur dans la zone de coupe et

la figure 16 représente un ruban découpé en anodes.

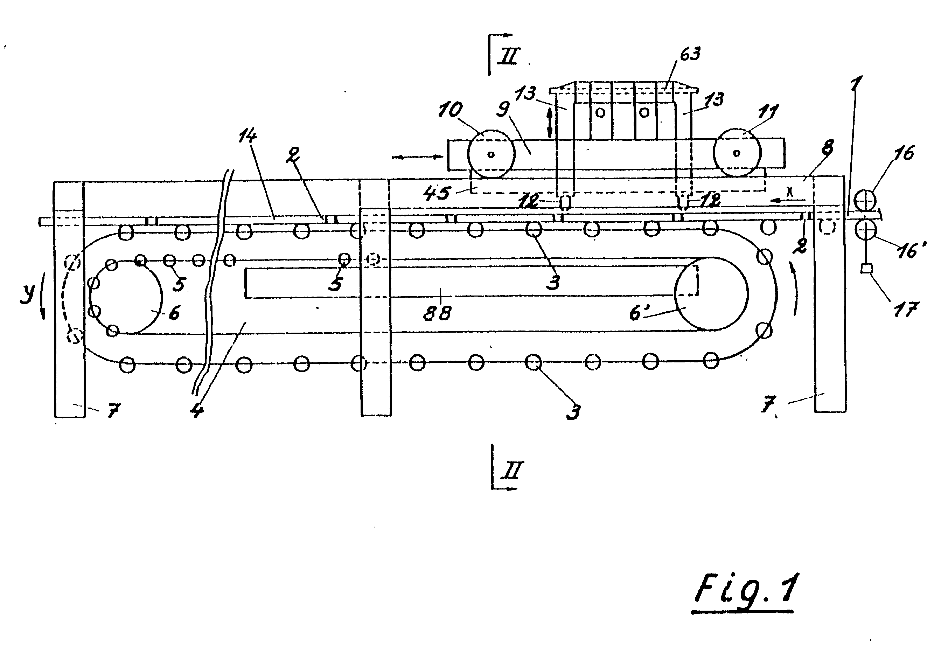

En se reportant maintenant à la figure 1, le ruban métallique 1 muni d'oreilles 2 en saillie et provenant d'une installation de coulée continue non représentée sur la figure, est porté par les rouleaux 3 d'un convoyeur sans fin 4, et se déplace dans le sens indiqué par la flèche X. Les rouleaux 3 sont montés sur deux chaînes sans fin 5 passant chacune autour de deux roues dentées 6 et 6'. Les deux roues dentées 6 sont motrices et tournent dans le sens indiqué par la flèche Y, entraînant les chaînes sans fin 5 et par conséquent les rouleaux 3.

Le convoyeur 4 est monté dans un châssis 7 dont les deux bords longitudinaux supérieurs supportent deux rails 8, sur lesquels se déplace un chariot porte-torches 9 porté par deux paires de roues 10 et 11 et animé d'un mouvement de va-et-vient.

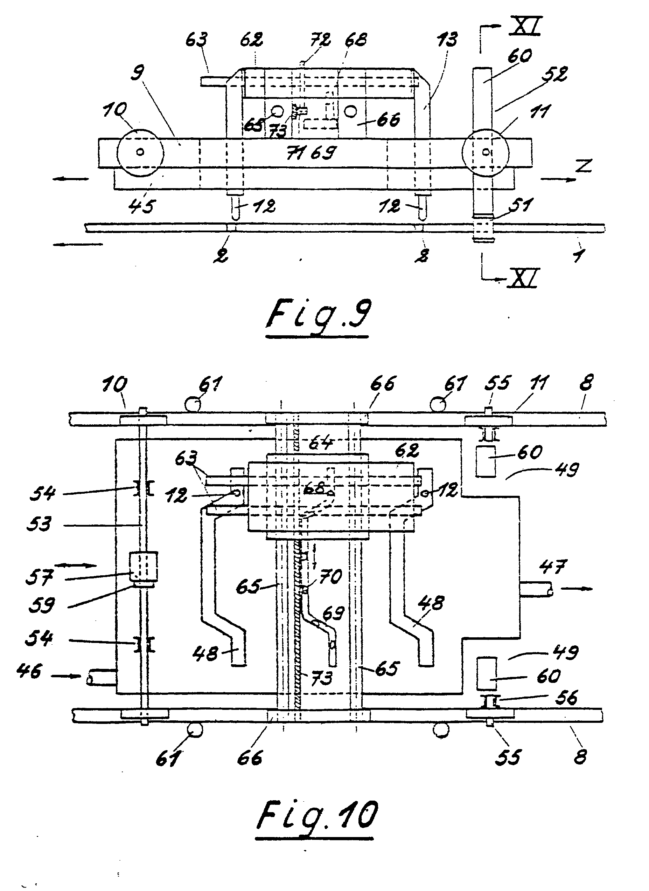

Le chariot 9 porte deux torches à plasma 12 fixées dans des bras 13 (figures 1 et 9).

La vitesse de déplacement du ruban métallique 1 sur le convoyeur 4 est commandée par une paire de rouleaux pinceurs 16 et 16', situés entre la machine de coulée continue non représentée et l'installation de découpage, et actionnés tous les deux par un moteur 17.

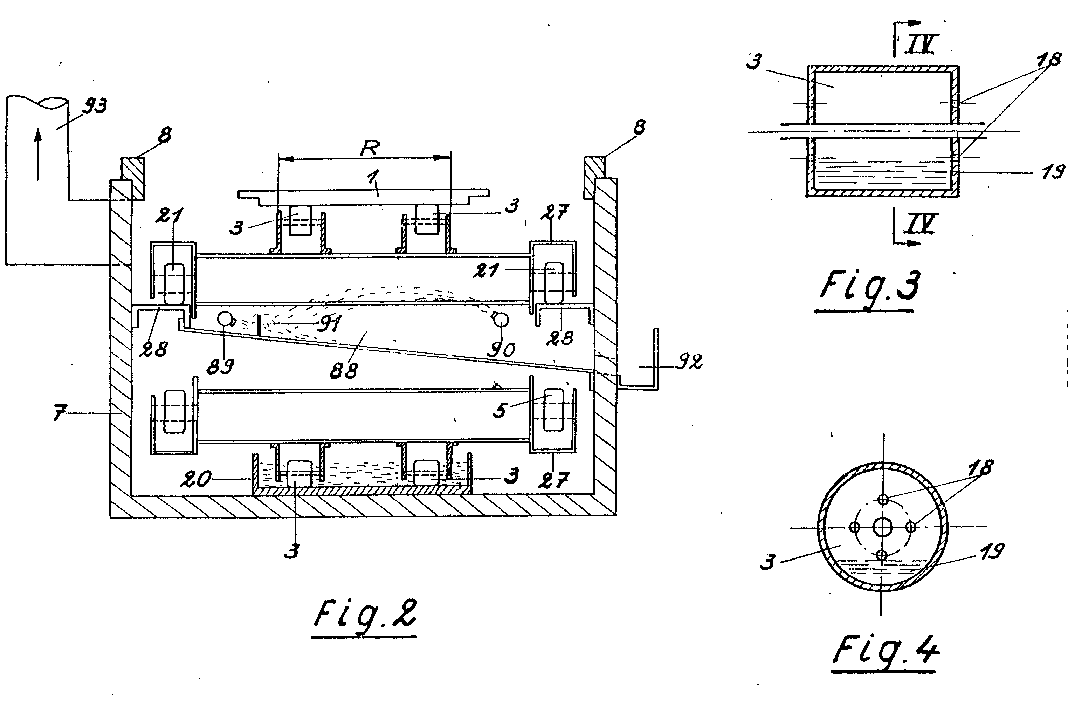

Les figures 3 et 4 montrent un agrandissement des rouleaux 3 portant le ruban métallique 1. Comme ce ruban métallique se trouve à une température comprise entre 700 et 850 °C lorsqu'il arrive dans la zone de découpage, il est nécessaire de refroidir les rouleaux qui le supportent. A cette fin les rouleaux 3 sont munis d'ouvertures latérales 18 permettant d'introduire un liquide de refroidissement 19, par exemple de l'eau, dans l'espace compris entre l'axe et le cylindre extérieur du rouleau.

La figure 2 montre comment les rouleaux 3, après avoir quitté le ruban métallique chaud 1, à l'extrémité du convoyeur 4, sont plongés dans un bac d'eau de refroidissement 20 disposé sous le convoyeur. Afin de diminuer la sollicitation des chaînes 5 du convoyeur, les rouleaux 3 roulent sur le fond du bac de refroidissement 20.

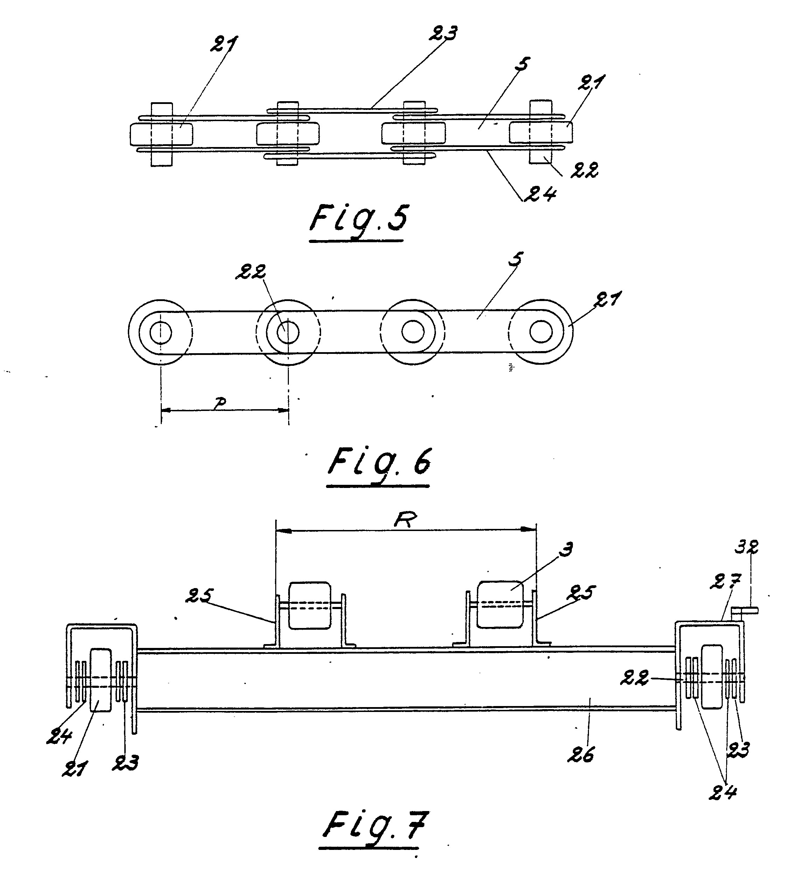

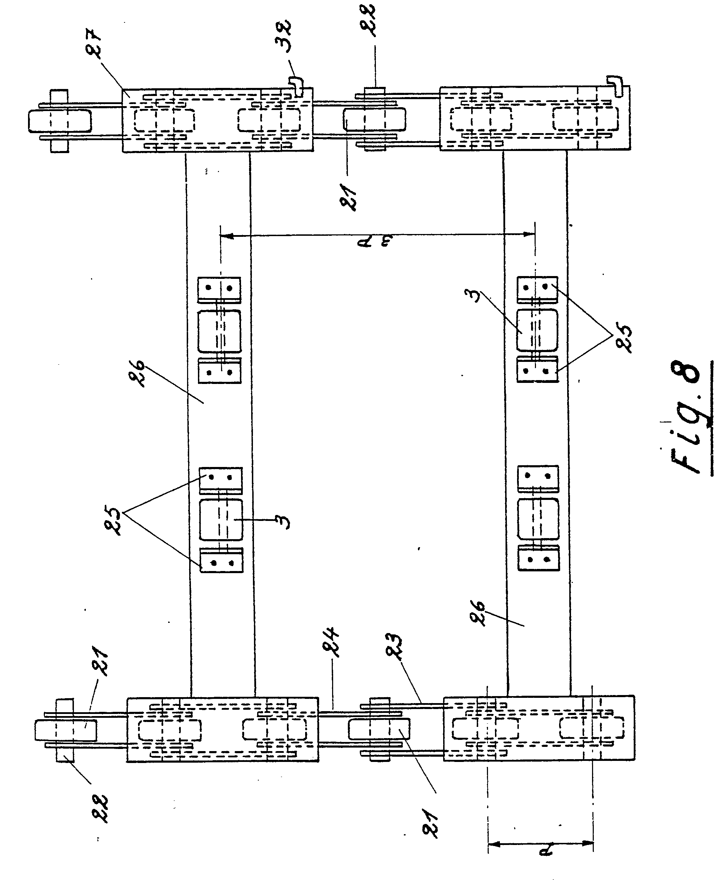

Les deux chaînes 5 (figures 5 et 6) sont du type commercial. Elles sont formées par une série de rouleaux 21 montés sur des pivots creux 22 et maintenus à un écartement régulier à l'aide de paires de plaques latérales extérieures 23 et intérieures 24. La distance entre les axes de deux rouleaux 21 successifs constitue le pas p de la chaîne. Ce pas p, par exemple 16 cm, est un sous-multiple de la longueur des anodes à découper, par exemple 96 cm. Les rouleaux 3 sont montés dans des paliers 25 (figures 7 et 8) disposés sur des poutres transversales 26 portées chacune par deux paires de rouleaux 21 des chaînes 5. Seul deux maillons sur trois des chaînes 5 portent un tel dispositif avec deux rouleaux 3, de sorte que la distance entre deux rouleaux 3 consécutifs vaut 3 p. Les poutres 26 sont soudées à des capes 27 surmontant deux rouleaux 21, ces capes étant rendues solidaires des rouleaux 21 à l'aide de boulons passés dans les pivots creux 22. De cette façon les rouleaux 3 qui portent le ruban métallique 1, sont montés rigidement sur les maillons des deux chaînes 5.

Les rouleaux 21 du brin supérieur des chaînes d'entraînement 5, qui supportent le poids du ruban métallique 1, par l'intermédiaire des rouleaux 3, roulent sur deux rails 28 (figure 2) soudés au châssis 7 du convoyeur, tandis que les rouleaux 21 du brin inférieur sont supportés à leur tour par les rouleaux 3, roulant sur le fond du bac de refroidissement 20. Les deux pignons moteurs 6 du convoyeur sont entraînés par un moteur électrique non représenté. La vitesse du convoyeur 4 est normalement identique à celle du ruban métallique 1 qu'il supporte grâce à une synchronisation entre le moteur 17 entraînant les rouleaux pinceurs et le moteur non représenté entraînant les pignons 6 ; cependant, cette vitesse peut être réglée par un dispositif de contrôle automatique.

Au début d'un cycle de découpage, les deux torches 12 viennent se placer chacune derrière une oreille d'anode 2 (figure 9). La détection de l'oreille 2 se fait, par exemple, à l'aide d'une cellule photo-électrique (non représentée) montée sur le chariot porte-torches 9 ; cette cellule donne, après détection de l'oreille, un signal pour arrimer le chariot 9 au ruban 1 à l'aide d'un dispositif d'arrimage qui sera décrit plus loin ; il s'ensuit qu'à ce moment le chariot 9, avec les torches 12 chacune en position de coupe derrière une oreille, se déplace à la même vitesse que le ruban 1. Cette cellule transmet également aux torches 12 un signal pour commencer l'opération de coupe, ce qui signifie que les torches sont allumées et commencent à se déplacer selon un profil de coupe prédéterminé ; ce signal sera appelé plus loin « signal de coupe ».

Pour éviter d'abîmer les rouleaux 3 pendant la coupe, il est nécessaire que les torches 12 se trouvent soit dans une étroite zone x (figure 15) située au milieu de l'espace séparant deux rouleaux 3 consécutifs, soit tout près de cette zone x. Si les torches, au moment où la coupe doit commencer, sont trop proches d'un rouleau 3, le convoyeur 4 sera accéléré ou ralenti jusqu'à ce que les torches se trouvent dans la zone x, tandis que le signal de coupe sera retardé jusqu'à ce que les torches se trouvent tout près de la zone x.

Pour détecter la position des torches 12 par rapport à celle des rouleaux 3, au moment où la coupe doit commencer, le chariot porte-torches 9 est muni d'un dispositif de détection 31, qui par souci de clarté a été représenté à une échelle plus grande que les autres éléments de la figure 15 et qui entre en action lorsque le chariot porte-torches 9 a été arrimé au ruban 1. Le dispositif de détection 31 se compose d'un levier 33, pouvant pivoter autour d'un axe horizontal 34 monté sur le chariot 9, ce levier étant muni à sa partie inférieure d'un sabot 35, qui lors de son passage le long d'une cape 27 est soulevé par un doigt 32 monté en saillie sur ladite cape 27. La partie supérieure du levier 33 est constituée d'un segment de cercle 36 portant trois cames 37, 38 et 39 servant à actionner des relais 41, 42, 43 et 44. Les cames 37 et 38 ont la même hauteur et actionnent respectivement les relais 41 et 44 ; la came 39 est plus haute que les cames 37 et 38 et actionne les relais 42 et 43.

Entre deux opérations de coupe successives, le chariot porte-torches 9 retourne à sa position de départ. Pendant ce déplacement le levier 33 est soulevé au-dessus des doigts 32 par l'action d'un cylindre hydraulique 29 appuyant sur une oreille 30 fixée sur la partie supérieure du levier 33. La sortie du piston du cylindre hydraulique 29 actionne un relais 40 empêchant le fonctionnement des torches 12 jusqu'à ce que le chariot porte-torches 9 soit parvenu à sa nouvelle position de coupe et ait été arrimé au ruban 1. A ce moment le piston du cylindre hydraulique 29 revient à sa position de départ, libérant le levier 33 et désenclenchant le relais 40. Les torches se trouvent à ce moment soit au-dessus d'une étroite zone x située au milieu de l'espace séparant deux rouleaux 3 consécutifs (figure 15), soit au-dessus de zones y ou y' adjacentes à ladite zone x, soit au-dessus de zones z ou z' situées plus près des et dans les rouleaux 3.

Du fait que la longueur des anodes est un multiple exact du pas p des chaînes d'entraînement 5, et égale deux fois la distance entre deux rouleaux 3 consécutifs, les torches ne se trouveront au-dessus d'une des zones z ou z' que lors du démarrage de l'installation de découpage. Une fois que l'installation est en fonctionnement normal les torches reviennent normalement chaque fois au-dessus de la zone x. Des faibles variations de la distance entre deux oreilles d'anode 2 consécutives peuvent cependant se produire, par exemple lorsque la température du ruban change. Dans ce cas, un léger décalage peut se produire de sorte que les torches 12 puissent se trouver au-dessus d'une des zones y ou y' au moment où la coupe doit commencer. Le dispositif de détection 31 a pour mission de détecter la position des torches 12, comme déjà mentionné plus haut, et de ramener les torches au-dessus d'une zone x. Ce dispositif fonctionne de la façon suivante.

Lorsque les torches se trouvent, chacune en position de coupe derrière une oreille 2, au-dessus d'une zone x, le levier 33 est légèrement soulevé par un doigt 32 dans la position indiquée dans la figure 15. La position des torches est indiquée par les flèches A et B. Dans cette position la came 39 actionne le relais 42, qui laisse passer le signal de coupe.

Lorsque les torches 12, au moment où la coupe doit commencer, se trouvent au-dessus d'une zone y, et sont donc plus proches du rouleau 3 situé à leur gauche sur la figure 15, le sabot 35 du levier 33 est soulevé à une hauteur plus faible par le doigt 32, le levier 33 tourne autour de son pivot 34 et la came 39 s'éloigne du relais 42 vers la gauche tandis que la came 37 actionne le relais 41. Le relais 41 laisse passer le signal de coupe et transmet au convoyeur 4 un signal d'accélération, le convoyeur étant accéléré pendant la coupe jusqu'à ce que la came 39 actionne à nouveau le relais 42, et que les torches 12 se trouvent à nouveau au-dessus de la zone x.

Lorsqu'au moment où la coupe doit commencer, les torches 12 se trouvent au-dessus d'une zone y', le sabot 35 est soulevé à une plus grande hauteur par le doigt 32, la came 39 s'éloigne du relais 42 vers la droite, tandis que la came 38 actionne le relais 44. Le relais 44 laisse passer le signal de coupe et transmet au convoyeur 4 un signal de ralentissement, le convoyeur étant ralenti pendant la coupe jusqu'à ce que la came 39 actionne à nouveau le relais 42.

Lorsque les torches, au moment où la coupe doit commencer, se trouvent au-dessus d'une zone z', le sabot 35 est soulevé jusqu'à environ sa hauteur maximum par le doigt 32, la came 39 s'éloigne du relais 42 vers la droite et actionne le relais 43. Dans cette position, le signal de coupe est retardé et le convoyeur 4 est accéléré jusqu'à ce que le doigt 32 suivant soulève le sabot 35 et actionne d'abord, par l'intermédiaire de la came 37, le relais 41 qui laisse passer le signal de coupe, et ensuite, par l'intermédiaire de la came 39, le relais 42 qui annule l'accélération du convoyeur 4. Cependant, au cours de cette accélération du convoyeur 4, le levier 33, lâché par le doigt 32 qui le soulevait, tombe dans sa position la plus basse et actionne pendant sa chute brièvement le relais 44 par l'intermédiaire de la came 38, le relais 42 par l'intermédiaire de la came 39 et le relais 41 par l'intermédiaire de la came 37. Pour empêcher les relais 41, 42 et 43 de laisser passer à ce moment le signal de coupe, le relais 43 reste encore enclenché pendant trois secondes après avoir été relâché par la came 39, ce qui suffit largement pour permettre au levier 33 d'atteindre sa position la plus basse.

Lorsque les torches 12, au moment où la coupe doit commencer, se trouvent au-dessus d'une zone z, le sabot 35 est à sa position la plus basse entre deux doigts 32 ; aucun relais n'est actionné par les cames 37, 38 et 39, la came 37 se trouvant à ce moment tout à fait à la gauche du relais 41, la came 39 se trouvant entre les relais 41 et 42 et la came 38 se trouvant à la gauche du relais 44. Dans cette position, le signal de coupe est retardé et le convoyeur 4 est accéléré jusqu'à ce qu'un doigt 32 vient soulever le sabot 35 et actionne d'abord, par l'intermédiaire de la came 37, le relais 41 qui laisse passer le signal de coupe, et ensuite, par l'intermédiaire de la came 39, le relais 42 qui annule l'accélération du convoyeur 4.

Donc, le signal de coupe est retardé lorsque le relais 43 est actionné et lorsqu'aucun des relais 41, 42, 43 et 44 n'est actionné. Cet arrangement est particulièrement utile lorsque les rouleaux 3 sont situés juste en dessous des bords latéraux du ruban 1. Cependant, lorsque ces rouleaux sont situés à une certaine distance desdits bords, comme c'est le cas dans le présent exemple (figure 2), il est également possible de laisser passer le signal de coupe même si, au moment où la coupe doit commencer, le relais 43 est actionné ou aucun des relais 41, 42, 43 et 44 n'est actionné. Dans ce cas, des moyens doivent être prévus pour retarder le signal de coupe si, au moment où les torches vont atteindre la zone des rouleaux R (figures 2 et 7), le relais 43 est encore actionné ou aucun des relais 41, 42, 43 et 44 n'est encore actionné. Ces moyens peuvent comprendre, par exemple, un contacteur adapté à être engagé par l'une des torches au moment où celle-ci va atteindre la zone des rouleaux R.

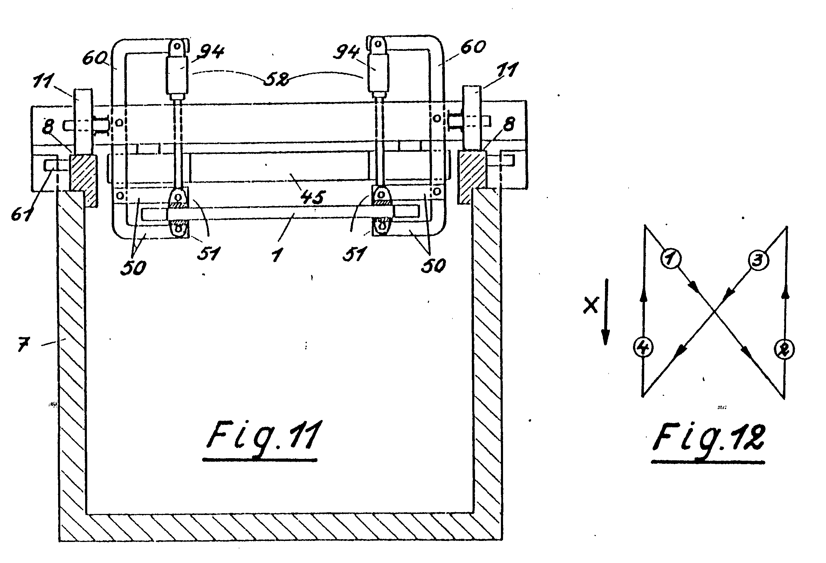

Comme il a été dit plus haut, le ruban métallique 1, arrivant dans la zone de découpage, se trouve à une température comprise entre 700 et 850 °C. Afin de protéger le chariot 9, portant le dispositif de découpage, contre la chaleur rayonnante du ruban métallique 1, un écran de protection 45 fixé au chariot porte-torches 9, sépare le dispositif de découpage du ruban métallique 1. Cet écran 45 est formé d'un caisson creux dans lequel circule un liquide de refroidissement introduit par une entrée 46 (figure 10), et qui sort du caisson par un tuyau de sortie 47. L'écran 45 est muni en outre de deux fentes profilées transversales 48 permettant le passage et le déplacement transversal des torches à plasma 12 lors du découpage du ruban métallique. L'écran 45 est également pourvu à son arrière de deux échancrures 49 (figure 10) permettant le passage de deux leviers 60, portant des pinces d'arrimage 51 faisant partie d'un dispositif d'arrimage 52 fixé à l'arrière du chariot porte-torches 9 (figures 9 et 11).

Le chariot porte-torches 9 se déplace sur deux rails 8 montés sur le châssis 7 le long du convoyeur 4 et est porté par deux paires de roues 10 et 11 dont seules les deux roues 10, montées à l'avant du chariot, sont motrices et montées sur un axe 53 dans deux paliers 54 (figure 10), tandis que les deux roues arrières 11 sont montées librement chacune sur un arbre 55 dans un palier 56. Un moteur électrique 57 actionne les deux roues avant 10 par l'intermédiaire de l'embrayage 59 et provoque le retour du chariot porte-torches 9 vers sa position de départ après l'opération de découpage, par exemple par l'intermédiaire d'un relais non représenté. Pendant toute l'opération de découpage d'une anode le chariot porte-torches 9 est rendu solidaire du ruban métallique 1 à découper, par l'intermédiaire d'un dispositif d'arrimage 52 monté à son arrière et qui sera décrit plus loin, et se déplace donc à la même vitesse que ledit ruban 1 dans le sens indiqué par la flèche X (figure 1). Le déplacement rectiligne du chariot 9 sur les rails 8 est assuré par quatre rouleaux de guidage 61 (figures 10 et 11) s'appuyant sur le côté extérieur des rails 8.

Les deux torches à plasma 12, dont l'extrémité inférieure est située à quelques mm du ruban métallique 1, sont portées par des bras 13 fixés aux deux extrémités d'un plateau supérieur 62 pouvant coulisser sur deux axes longitudinaux 63 disposés parallèlement aux rails 8 et permettant au plateau 62 un mouvement de va-et-vient dans le sens longitudinal du chariot porte-torches 9. Les deux axes 63 sont fixés sur un plateau inférieur 64 pouvant lui-même coulisser sur deux axes transversaux 65, disposés perpendiculairement à la direction de déplacement du chariot porte-torches 9 et permettant au plateau inférieur 64 un mouvement de va-et-vient dans un sens transversal par rapport au chariot porte-torches 9. Les deux axes transversaux 65 sont supportés par deux appuis 66 montés sur le chariot porte-torches 9.

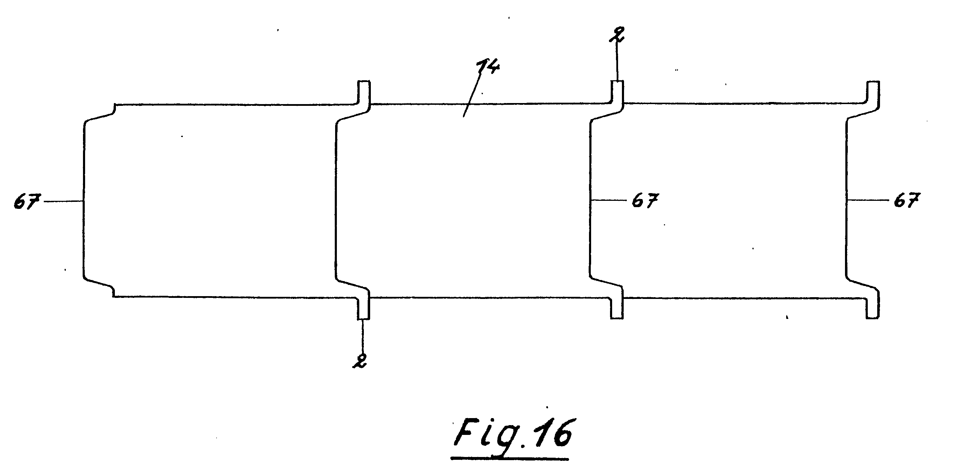

Pendant l'opération de découpage des anodes, les deux torches à plasma 12 se déplacent le long d'une trajectoire épousant le profil 67 du bord de l'anode 14 (figure 16). Ce déplacement est commandé par une tige de guidage 68 dont l'extrémité supérieure est fixée au plateau supérieur 62 portant les deux torches à plasma 12, et dont l'extrémité inférieure est constituée d'un galet adapté à tourner librement autour de l'axe de la tige de guidage 68 dans une coulisse de guidage 69. La coulisse de guidage 69 est fixée rigidement au chariot porte-torches 9 et présente le même profil 69 que l'anode 14. Lors du déplacement transversal du plateau inférieur 64 sur les axes transversaux 65, la tige de guidage 68 et donc également les deux torches à plasma 12 qui sont solidaires de cette tige, se déplacent selon le profil de la coulisse de guidage 69.

Il est possible de remplacer la coulisse de guidage 69 par une coulisse présentant un autre profil, ce qui permet de découper des pièces selon n'importe quel profil. Les fentes 48 pratiquées dans l'écran de refroidissement 45 et qui permettent le passage des torches à plasma 12, ont une largeur suffisante permettant aux torches 12 de parcourir ces différentes trajectoires. La coulisse de guidage 69 peut être munie dans le fond d'ouvertures 70 permettant l'évacuation des saletés, par exemple déchets de lubrifiant, et assurant ainsi un passage aisé de la tige de guidage 68. Le déplacement transversal du plateau inférieur 64 sur les axes 65 est commandé par un moteur électrique non représenté, monté sur ledit plateau 64 et qui actionne un engrenage 71 (figure 9) fixé à l'extrémité inférieure d'un axe 72. Les dents de l'engrenage 71 engrènent avec les dents d'une crémaillère rectiligne fixe 73 disposée transversalement sur le chariot porte-torches 9. Pendant sa rotation la roue dentée 71 se déplace le long de la crémaillère 73 entraînant avec elle le plateau inférieur 64 qui coulisse sur les deux axes transversaux 65, ainsi que la tige de guidage 68 qui se déplace le long de la coulisse de guidage 69, de sorte que les deux torches à plasma 12, solidaires de la tige de guidage 68, parcourent une trajectoire semblable à celle de la coulisse de guidage 69.

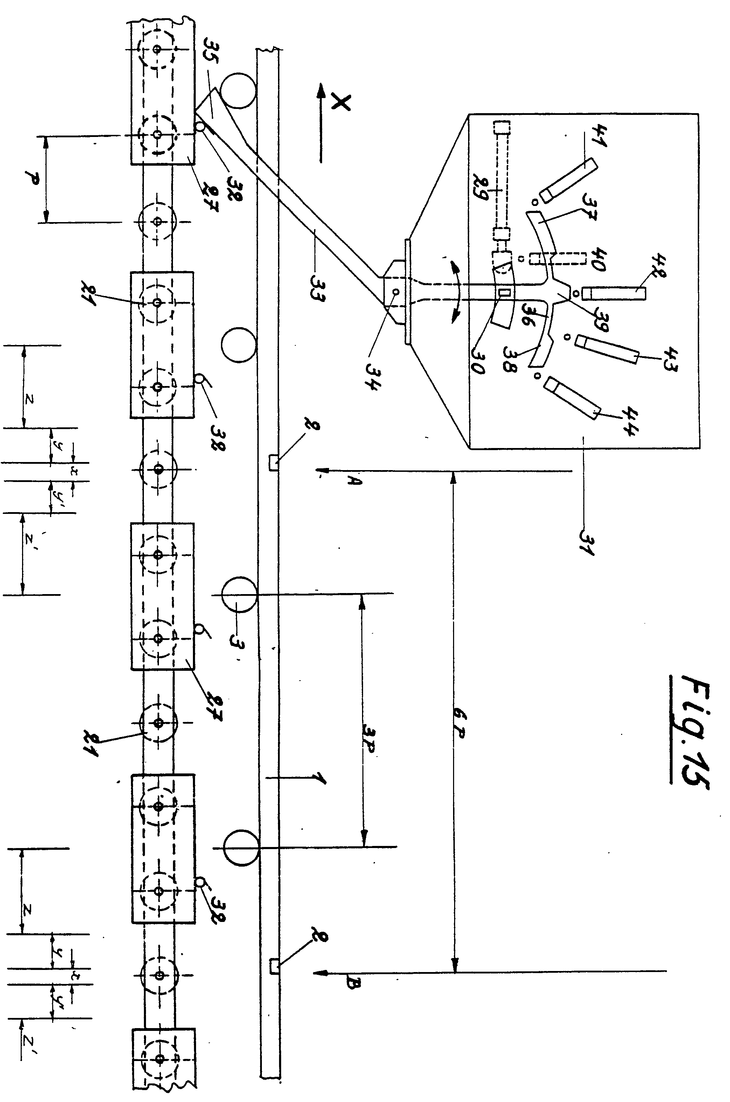

Les torches à plasma 12, qui sont du type commercial, sont munies d'un système de refroidissement interne non représenté. Ce système est cependant insuffisant pour protéger les torches contre la chaleur rayonnante du ruban métallique chaud 1. Afin d'assurer leur protection adéquate chaque torche à plasma 12 est dès lors munie en outre d'une gaine de protection contre la chaleur 76 (figures 13 et 14). Cette gaine de protection est constituée d'un manchon cylindrique creux séparé axialement en deux demi-cylindres 77 et 78 à l'aide d'une paroi verticale 79 et s'étend sur une partie de la hauteur de la torche à plasma 12 depuis environ l'extrémité inférieure de ladite torche à plasma, jusqu'à un point situé au-dessus du niveau supérieur de l'écran de protection 45.

A leur partie inférieure, sous l'écran de protection 45, les deux demi-cylindres 77 et 78 s'évasent en formant un plateau circulaire creux 80 muni de chicanes de distribution 81 et 81' ayant la forme d'arcs de cercle. La gaine de protection 76 est munie en outre d'un tuyau 82 pour l'arrivée du liquide de refroidissement et d'un tuyau 83 pour la sortie du liquide de refroidissement. Entre le plateau circulaire 80 et l'extrémité inférieure de la torche à plasma 12 est disposé un anneau d'étanchéité 87.

Le liquide de refroidissement, par exemple de l'eau, entre dans le manchon de refroidissement par le tuyau d'arrivée 82, descend le long du manchon semi-cylindrique 77, pénètre dans la partie droite du plateau circulaire 80, passe autour des deux chicanes 81 et de là pénètre dans la partie gauche du plateau 80, où elle passe autour des deux chicanes 81' pour remonter le long du manchon semi-cylindrique 78 et sortir de la gaine de protection par le tuyau de sortie 83.

Sous la zone de découpage le convoyeur 4 est muni d'un bac de refroidissement 88 (figure 2) disposé sous les rouleaux 3 supportant le ruban métallique 1. Un liquide de refroidissement destiné à précipiter les vapeurs métalliques formées lors du découpage est amené dans le bac 88 par deux tuyaux 89 et 90 pourvus d'une série de pulvérisateurs. Le tuyau 90 projette ou pulvérise de l'eau directement sous le ruban métallique 1, sous forme d'un fin voile horizontal, pour abattre les vapeurs métalliques, tandis que l'eau sortant du tuyau 89 déborde par un déversoir 91 et s'écoule sur le fond incliné du bac de refroidissement 88 vers un chenal d'évacuation 92, entraînant avec elle des battitures et des particules de métal oxydé provenant de l'opération de découpage. Les fumées provenant de l'opération de découpage sont évacuées par la cheminée 93.

Pendant le découpage des anodes, le chariot porte-torches 9 est arrimé au ruban métallique 1 et accompagne celui-ci dans son déplacement. L'arrimage est effectué à l'aide de deux pinces 51 montées sur l'arrière du chariot porte-torches 9 comme il a été dit plus haut. Les pinces 51 supportées par deux bras 50 associés eux-mêmes à deux leviers 60, passent par les échancrures 49 pratiquées dans l'écran de refroidissement 45. Ces pinces 51, qui sont actionnées simultanément par un cylindre pneumatique ou hydraulique 94, agrippent les bords extérieurs du ruban métallique 1 lorsque les torches à plasma 12 sont en position de coupe et relâchent le ruban métallique lorsque le découpage de deux anodes est terminé, libérant ainsi le chariot porte-torches 9 qui est ensuite ramené à une nouvelle position de coupe à l'aide du moteur électrique 57. Pour éviter un choc trop brusque lors de l'arrimage au ruban métallique 1, le chariot porte-torches 9 peut être ramené d'abord en une position en amont de sa position de coupe et ensuite accéléré progressivement à l'aide du moteur 57, dans le sens du déplacement du ruban métallique 1 ; dans ce cas les pinces agrippent le ruban métallique lorsque les vitesses du chariot porte-torches et du ruban métallique sont presqu'égales.

La vitesse de translation linéaire de l'engrenage d'entraînement 71 le long de la crémaillère 73 est réglable à l'aide d'un dispositif à thyristor non représenté. En faisant varier cette vitesse de façon adéquate, il est possible d'obtenir une vitesse de coupe constante le long de la trajectoire non linéaire de la tige de guidage 68, entre l'amorçage et la fin de la coupe qui se font préférablement à vitesse réduite.

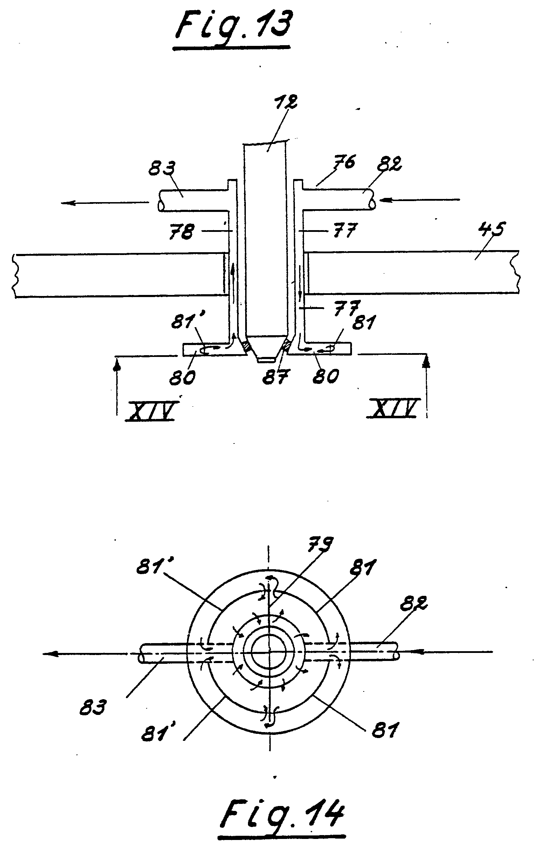

Les deux torches à plasma 12 effectuent le découpage du ruban 1 selon un mouvement cyclique à quatre temps représenté schématiquement à la figure 12, où la flèche X indique le sens de l'avancement du ruban métallique 1, les cycles 1 et 3 correspondant chacun à un découpage par les torches à plasma 12 selon le profil de la coulisse de guidage 69 et les cycles 2 et 4 correspondant au retour des torches à plasma respectivement vers une position intermédiaire et vers la position de départ initiale.

Les anodes découpées 14, portées par les rouleaux 3 du convoyeur 4 quittent la zone de découpage et arrivent à une zone d'évacuation située à l'extrémité du convoyeur 4, où les anodes sont soulevées deux à deux et évacuées à l'aide d'un dispositif connu en soi et non représenté.

**Revendications**

1. Installation pour couper un ruban métallique (1) en mouvement, en pièces uniformes (14), comportant :

— un convoyeur à rouleaux sans fin mobile (4), dont le brin supérieur supporte le ruban (1) dans une zone de coupe,

— un chariot (9), situé au-dessus du ruban (1) et adapté à se déplacer dans la zone susdite dans le sens de l'avancement du ruban (1) et dans le sens inverse, et

— un dispositif de coupe thermique (12), qui est porté par le chariot (9) susdit et qui est adapté à se déplacer dans un sens transversal au sens de l'avancement du ruban (1),

caractérisé en ce que le convoyeur (4) susdit est adapté à tourner de façon que son brin supérieur se déplace en continu dans le sens de l'avancement du ruban (1) et qu'elle comporte des premiers moyens (32 à 39) pour indiquer la position des rouleaux (3) du convoyeur (4) par rapport à la position du chariot (9) et des seconds moyens (41 à 44) pour faire agir ces premiers moyens sur la vitesse du convoyeur (4) et sur l'opération de coupe.

2. Installation selon la revendication 1, caractérisée en ce que le convoyeur à rouleaux sans fin (4) comporte deux chaînes sans fin (5) parallèles, auxquelles sont associés des supports (25, 26, 27) pour les axes des rouleaux (3).

3. Installation selon la revendication 2, caractérisé en ce que la distance entre ces deux chaînes (5) est supérieure à la largeur du ruban (1).

4. Installation selon l'une quelconque des revendications précédentes, caractérisée en ce que les rouleaux (3) présentent une cavité intérieure communiquant avec l'extérieur.

5. Installation selon l'une quelconque des revendications précédentes, caractérisée en ce qu'elle comporte un bac (20) rempli d'un liquide réfrigérant, dans lequel plongent les rouleaux (3) avant d'aller supporter le ruban (1).

6. Installation selon la revendication 1, caractérisé en ce que ces premiers moyens (32 à 39) comportent un élément (33) pivotant autour d'un pivot (34) monté sur le chariot (9) et un nombre de doigts (32) égal au nombre des rouleaux (3) successifs du convoyeur (4), ces doigts (32) étant montés sur le convoyeur (4) de façon que la position de chacun desdits rouleaux (3) successifs soit témoignée par un de ces doigts (32) et la partie inférieure (35) de l'élément pivotant (33) étant adaptée à être engagée par un de ces doigts (32).

7. Installation selon l'une quelconque des revendications précédentes, caractérisée en ce que le chariot (9) comporte un premier élément (64) adapté à coulisser dans un sens transversal au sens de l'avancement du ruban (1), des moyens (71, 72, 73) pour faire coulisser cet élément (64), un second élément (62) solidaire du dispositif de coupe (12) et d'une tige de guidage (68) et adapté à coulisser sur le premier élément (64) dans un sens parallèle au sens de l'avancement du ruban (1), et une coulisse de guidage (69), solidaire du chariot (9), pour la tige de guidage (68), la forme de cette coulisse (69) correspondant au profil de coupe (67) désiré.

8. Installation selon la revendication 7, caractérisée en ce que le chariot (9) comporte des moyens pour faire coulisser le premier élément (64) à une vitesse telle que la vitesse de coupe soit constante.

9. Installation selon l'une quelconque des revendications précédentes, caractérisée en ce que le dispositif de coupe thermique (12) est constitué de deux torches à plasma disposées de façon à pouvoir opérer en parallèle.

10. Installation selon l'une quelconque des revendications précédentes, caractérisée en ce qu'elle comporte des moyens (90) pour projeter un liquide réfrigérant sous la surface inférieure du ruban dans la zone de coupe susdite et un bac (88) pour collecter le liquide projeté.

11. Installation selon l'une quelconque des revendications précédentes, caractérisée en ce que le chariot (9) est muni à sa partie inférieure d'un écran (45) de protection contre la chaleur.

12. Installation selon la revendication 11, caractérisée en ce que l'écran (45) est constitué d'un caisson adapté à être refroidi par circulation d'un liquide réfrigérant.

13. Installation selon l'une quelconque des revendications précédentes, caractérisée en ce que le chariot (9) comporte des moyens (52) permettant de l'arrimer au ruban (1) pendant l'opération de coupe.

14. Installation selon la revendication 13, caractérisée en ce que le chariot (9) comporte des moyens pour lui imprimer une vitesse proche de celle du ruban (1) au moment de son arrimage.

15. Installation selon l'une quelconque des revendications précédentes, caractérisée en ce que le dispositif de coupe thermique (12) est entouré d'une chemise (76) adaptée à être refroidie par circulation d'un liquide réfrigérant.

**Claims**

1. An installation for cutting a moving metallic strip (1) into identical pieces (14), which comprises

— a movable endless roller conveyor (4), the upper run of which carries the strip (1) in a cutting zone,

— a carriage (9), located above the strip (1) and adapted to move within said zone in the same direction as the strip (1) and in the opposite direction, and

— a thermal cutting device (12), carried by said carriage (9) and adapted to move transversally to the advancing direction of the strip (1),

characterized in that the conveyor (4) is adapted to revolve in such a way that its upper run continuously moves in the same direction as the strip (1) and in that it comprises first means (32 to 39) for indicating the position of the rollers (3) of the conveyor (4) with respect to the position of the carriage (9) and second means (41 to 44) to make said first means act upon the speed of the conveyor (4) and upon the cutting operation.

2. An installation according to claim 1, characterized in that the endless roller conveyor (4) comprises two parallel endless chains (5) to which are associated supports (25, 26, 27) for the axles of the rollers (3).

3. An installation according to claim 2, characterized in that the distance between the two chains (5) is greater than the width of the strip (1).

4. An installation according to any of the preceding claims, characterized in that the rollers (3) present an inner cavity communicating with the exterior.

5. An installation according to any of the preceding claims, characterized in that it comprises a tank (20) filled with a cooling liquid, in which the rollers (3) dip before supporting the strip (1).

6. An installation according to claim 1, characterized in that said first means (32 to 39) comprise an element (33) pivoting around a pivot (34) mounted on the carriage (9) and a number of fingers (32) equal to the number of the successive rollers (3) of the conveyor (4), said fingers (32) being mounted on the conveyor (4) in such a way that the position of each of said successive rollers (3) is witnessed by one of said fingers (32) and the lower part (35) of the pivoting element (33) being adapted to be engaged by one of these fingers (32).

7. An installation according to any of the preceding claims, characterized in that the carriage (9) comprises a first element (64) adapted to slide in a direction transverse to the advancing direction of the strip (1), means (71, 72, 73) for making said element (64) slide, a second element (62) rigidly connected with the cutting device (12) and with a guide rod (68) and adapted to slide over the first element (64) in a direction parallel to the advancing direction of the strip (1) and a guide slot, rigidly connected with the carriage (9), for the guide rod (68), the shape of said guide slot (69) corresponding to the desired cutting profile (67).

8. An installation according to claim 7, characterized in that the carriage (9) comprises means for making the first element (64) slide at such speed that the cutting speed remains constant.

9. An installation according to any of the preceding claims, characterized in that the thermal cutting device (12) is made of two plasma torches disposed to operate in parallel.

10. An installation according to any of the preceding claims, characterized in that it comprises means (90) for spraying a cooling liquid under the lower surface of the strip in said cutting zone and a tank (88) for collecting the sprayed liquid.

11. An installation according to any of the preceding claims, characterized in that the carriage (9) is provided at its lower part with a heat protection screen (45).

12. An installation according to claim 11, characterized in that the screen (45) is formed by a box adapted to be cooled by circulation of a cooling liquid.

13. An installation according to any of the preceding claims, characterized in that the carriage (9) comprises means (52) for coupling it to the strip (1) during the cutting operation.

14. An installation according to claim 13, characterized in that the carriage (9) comprises means for communicating to it a speed close to that of the strip (1) at the moment it is coupled to the strip.

15. An installation according to any of the preceding claims, characterized in that the thermal cutting device (12) is surrounded with a sheath (76) adapted to be cooled by circulation of a cooling liquid.

## Ansprüche

1. Vorrichtung zum Schneiden eines sich bewegenden Metallbandes (1) in gleiche Stücke (14)
— mit einem Kreistransporteur (4), dessen oben verlaufende Bahn das Band (1) in einer Schneidezone trägt,
— mit einem Wagen (9), der oberhalb des Bandes (1) und in der genannten Zone in der gleichen Richtung wie dieses sowie in der Gegenrichtung bewegbar angeordnet ist,
— sowie mit einer thermischen Schneideeinrichtung (12), die von dem Wagen (1) getragen und quer zur Förderrichtung des Bandes (1) bewegbar ist,
dadurch gekennzeichnet, dass der Transporteur (4) derart revolvierend bewegbar ist, dass seine obere Bahn sich kontinuierlich in Bandförderrichtung bewegt, und dass sie erste Mittel (32-39) zur Anzeige der Lage der Rollen (3) des Transporteurs (4) in bezug auf den Wagen (9) und zweite Mittel (41-44) aufweist, die die ersten Mittel auf die Geschwindigkeit des Transporteurs und auf die Schneideoperation einwirken lassen.

2. Vorrichtung nach Anspruch 1, dadurch gekennzeichnet, dass der Kreistransporteur (4) zwei parallel verlaufende Endlosketten (5) aufweist, denen Auflager (25, 26, 27) für die Achsen der Rollen (3) zugeordnet sind.

3. Vorrichtung nach Anspruch 2, dadurch gekennzeichnet, dass der Abstand zwischen den beiden Ketten (5) grösser als die Breite des Bandes (1) ist.

4. Vorrichtung nach einem der vorhergehenden Ansprüche, dadurch gekennzeichnet, dass die Rollen (3) einen Innenhohlraum aufweisen, der eine Verbindung nach aussen hat.

5. Vorrichtung nach einem der vorhergehenden Ansprüche, dadurch gekennzeichnet, dass sie einen mit einer Kühlflüssigkeit gefüllten Behälter (20) aufweist, in den die Rollen (3) eintauchen, bevor sie das Band (1) aufnehmen.

6. Vorrichtung nach Anspruch 1, dadurch gekennzeichnet, dass zu den ersten Mitteln (32-39) ein um einen am Wagen (9) befestigten Bolzen (33) herum drehbar Element (33) sowie soviele Finger (32) gehören, wie aufeinanderfolgende Rollen (3) des Kreistransporteurs (4) vorhanden sind, die derart an dem Kreistransporteur befestigt sind, dass die Lage jeder der aufeinanderfolgenden Rollen (3) durch einen der Finger (32) kenntlich gemacht wird, und dass der untere Teil (35) des drehbaren Elements (33) so ausgebildet ist, dass er von einem dieser Finger (32) angegriffen werden kann.

7. Vorrichtung nach einem der vorhergehenden Ansprüche, dadurch gekennzeichnet, dass zu dem Wagen (9) folgende Bestandteile gehören : ein erstes Element (64), das quer zur Förderrichtung des Bandes (1) gleitbar befestigt ist, Mittel (71, 72, 73) zum Herbeiführen der Gleitbewegung des genannten Elements (64), ein zweites Element (62), das starr mit der Schneidevorrichtung (12) und mit einem Führungsstab (68) verbunden und so ausgebildet ist, dass es über das erste Element (64) hinweg parallel zur Förderrichtung des Bandes (1) bewegt werden kann, sowie eine mit dem Wagen (9) fest verbundene Führungsrinne (69) für den Führungsstab (68), deren Verlauf dem gewünschten Schnittprofil (67) entspricht.

8. Vorrichtung nach Anspruch 7, dadurch gekennzeichnet, dass der Wagen Mittel aufweist, die das erste Element (64) in eine Gleitbewegung derartiger Geschwindigkeit versetzen, dass die Schneidegeschwindigkeit konstant bleibt.

9. Vorrichtung nach einem der vorhergehenden Ansprüche, dadurch gekennzeichnet, dass die thermische Schneidevorrichtung (12) aus zwei Plasmabrennern besteht, die zueinander parallel arbeiten.

10. Vorrichtung nach einem der vorhergehenden Ansprüche, dadurch gekennzeichnet, dass sie Mittel (90) zum Sprühen von Kühlflüssigkeit unter der Unterseite des Bandes im Bereich der genannten Schneidezone sowie einen Behälter (88) zum Sammeln der versprühten Flüssigkeit aufweist.

11. Vorrichtung nach einem der Vorhergehenden Ansprüche, dadurch gekennzeichnet, dass der Wagen (9) an seinem unteren Teil mit einem Hitzeschutzschild (45) versehen ist.

12. Vorrichtung nach Anspruch 11, dadurch gekennzeichnet, dass das Schutzschild (45) durch einen Kasten gebildet wird, der so ausgestaltet ist, dass er durch Zirkulation einer Kühlflüssigkeit gekühlt werden kann.

13. Vorrichtung nach einem der vorhergehenden Ansprüche, dadurch gekennzeichnet, dass der Wagen (9) Mittel (52) aufweist, mit denen er während der Schneideoperation an das Band (11) angekuppelt werden kann.

14. Vorrichtung nach Anspruch 13, dadurch gekennzeichnet, dass der Wagen (9) Mittel aufweist, mit denen ihm im Moment des Ankuppelns an das Band eine Geschwindigkeit gegeben werden kann, die nahezu diejenige des Bandes (1) ist.

15. Vorrichtung nach einem der vorhergehenden Ansprüche, dadurch gekennzeichnet, dass die thermische Schneidevorrichtung mit einer Hülle (76) umgeben ist, die durch Zirkulation einer Kühlflüssigkeit gekühlt werden kann.

Fig.1

0 006 276

Fig.3

Fig.2

Fig.4

0 006 276

_Fig.5_

_Fig.6_

_Fig.7_

Fig. 8

4

Fig.9

Fig.10

Fig.11

Fig.12

## Fig. 13

## Fig. 14

_Fig.15_

0 006 276

0 006 276

Fig.16